# DEMANDE DE BREVET EUROPEEN

(11) **EP 1 898 364 A1**
(43) Date de publication de la demande: **12.03.2008**
(21) Numéro de dépôt: 07291044.1
(22) Date de dépôt: 28.08.2007
(51) Int. Cl.: G07C 9/00, G06K 19/07

(54) **Télébadge à module de réveil**

(30) Priorité: 30.08.2006 FR 0607636
(71) Demandeur: CS Systemes d'Informations, 92350 Le Plessis Robinson (FR)
(72) Inventeur: Alarcon, Philippe, 75014 Paris (FR)
(74) Mandataire: Bloch, Gérard

(57) **Abrégé**

Le Télébadge comporte au moins un récepteur (46) de signaux radio, un microprocesseur (44) de traitement de signaux, un module de réveil du microprocesseur (44) agencé pour faire fonctionner ledit microprocesseur (44) selon un mode en sommeil de basse consommation ou un mode en éveil de pleine consommation. Le module de réveil (48, 56) est disposé entre le récepteur radio (46) et le microprocesseur (44).

L'invention s'applique bien aux zones protégées ou véhicules automobiles.

## Description

La présente invention concerne un dispositif de réveil d'un badge de télépéage et, plus généralement d'un télébadge, comme par exemple un badge d'accès à une zone protégée ou un badge de véhicule automobile.

Dans le cas des télépéages, par exemple d'autoroute, au passage d'un véhicule, équipé d'un télébadge, à un poste de télépéage, équipé d'une base radio de télépéage (balise), la base et le badge sont automatiquement mis en relation radio pour identification du véhicule et réalisation d'une transaction de paiement du péage.

Plus généralement, la base est agencée pour reconnaître le badge et agir sur un organe de commande d'accès de façon spécifique conformément aux droits d'accès mémorisés dans le badge.

Dans tous les cas, le badge est alimenté par une batterie autonome dont il faut optimiser l'autonomie. De plus, le badge étant d'un encombrement volontairement minimal, sa batterie doit être d'un volume aussi minimal, ce qui va à l'encontre de sa capacité d'autonomie.

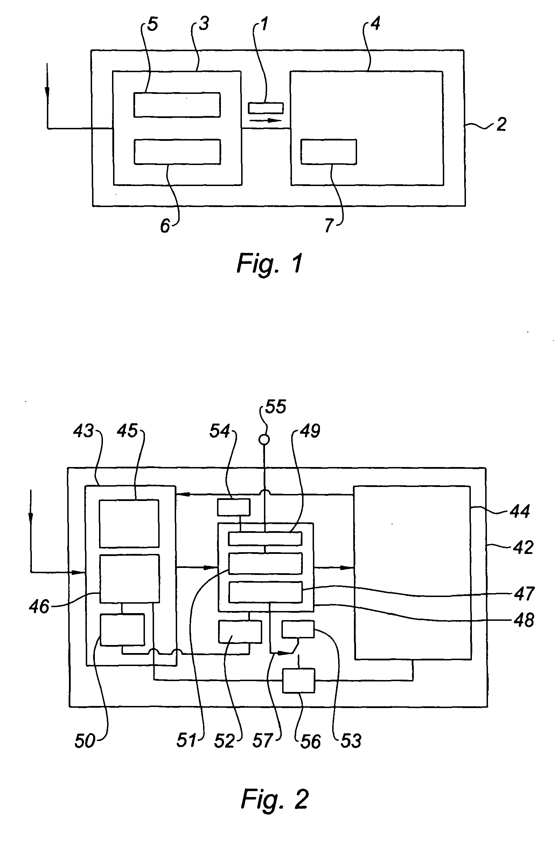

Pour cela, et en référence à la figure 1, lorsque le badge 2 est hors de portée de sa base (non représentée), le circuit électrique du badge, ici composé d'un circuit radio 3 et d'un microprocesseur 4 de traitement du signal radio reçu, est mis dans un état de sommeil de basse consommation.

Dans cet état, seuls le récepteur 6 du circuit radio 3 et un module 7 du microprocesseur 4 chargé du réveil du badge 3 sont maintenus en éveil, l'émetteur 5 du circuit radio 3 et le reste du microprocesseur 4 n'étant pas alimentés.

Quand le badge est à portée de sa base, le récepteur 6 reçoit les signaux radio de la base, les démodule et alerte le module 7 qui réveille le badge 3 en mettant sous alimentation ses autres fonctionnalités. Le badge 3, après réveil, est ainsi mis en état de pleine consommation.

Pour donner une idée des économies de consommation, un badge consomme approximativement 15 milliampères en période de pleine consommation ou de réveil et seulement 20 microampères en période de basse consommation ou de sommeil.

Cependant, les badges de télépéage fonctionnent dans une bande radio (5,8 Giga Hertz) qui est très perturbée par d'autres utilisations (Services médicaux, Wifi, ...) et les signaux non pertinents ou parasites, parce qu'ils sont démodulés par le récepteur 6, peuvent provoquer des actions intempestives du module 7 et de nombreux réveils inutiles dégradant d'autant l'autonomie du badge.

La demanderesse a recherché une solution pour éviter cette dégradation et c'est ainsi qu'elle propose son invention.

Ainsi, la présente invention concerne un télébadge comportant au moins un récepteur de signaux radio, un microprocesseur de traitement de signaux, un module de réveil du microprocesseur agencé pour faire fonctionner ledit microprocesseur selon un mode en sommeil de basse consommation ou un mode en éveil de pleine consommation, le télébadge étant caractérisé par le fait que le module de réveil est disposé entre le récepteur radio et le microprocesseur.

Grâce à la séparation des circuits de réveil et des circuits de contrôle commande du badge, les économies de consommation sont plus faciles à réaliser. Le module de réveil analyse les données reçues pour ne générer un réveil que sur des trames particulières.

Le module de réveil est avantageusement agencé pour analyser les signaux reçus, détecter si des trames de format conformes à une référence de trame prédéterminée sont présentes, et ne réveiller le microprocesseur que si les signaux sont conformes à la référence.

Avantageusement le module de réveil comporte une mémoire contenant ladite référence prédéterminée, une alimentation spécifique alimentant ladite mémoire.

D'autres caractéristiques et avantages de la présente invention apparaîtront plus clairement à la lecture de la description ci-après du dispositif de réveil du télé badge selon l'invention, faite en référence aux dessins annexés sur lequel :
- la figure 1 représente un schéma par blocs fonctionnels d'un badge de télépéage, ou télébadge, avec un dispositif de réveil, selon l'art antérieur ;
- la figure 2 représente un schéma par blocs fonctionnels du télébadge à module de réveil selon l'invention ;
- la figure 3 représente une trame de données binaires de signaux de télépéage ;
- la figure 4 représente un chronogramme d'une succession de créneaux modulés de transitions, conformément au format des signaux de télépéage ;
- la figure 5 représente un chronogramme d'un créneau échantillonné pour son décodage dans le badge et
- la figure 6 représente un organigramme de fonctionnement du décodage des signaux de télépéage.

En référence à la figure 2, le badge 42 comporte, classiquement, un module radio 43, avec un émetteur 45 et un récepteur 46, et un microprocesseur 44 de traitement de signaux et des données numériques transmises par le circuit radio 43.

A l'intérieur du module radio 43 se trouve un module 50 de pré-réveil du module pour le réveiller dès réception de la modulation. Ce module 50 consomme très peu.

Les données numériques sont transmises séquentiellement par l'émetteur d'une balise (non représentée) au récepteur 46 du badge 2 au moyen d'un signal carré comportant des trames 1 de données binaires au format du type HDLC (High level ou Hierarchical Data Link Control ou protocole de réseau à commutation de paquets <ISO X.25>) mieux décrits dans la suite.

Le badge 2 est capable de fonctionner selon deux modes principaux de fonctionnement : un mode en éveil à pleine consommation quand il est à portée de la balise, et un mode en sommeil à basse consommation, quand il en est éloigné.

Pour sélectionner le mode, le badge 2 comporte, entre le module radio 43 et le microprocesseur 44, un circuit ASIC (Application Specific Integrated Circuit ou circuit intégré spécifique à des applications) 48, qui comporte lui-même un module de décodage 47, un module de sélection 51 et un registre mémoire 49.

Par ailleurs, le badge 2 est alimenté par trois alimentations différentes :
- une batterie 52 alimentant en permanence le module de pré-réveil 50 et l'ASIC 48 sauf son registre 49,
- une batterie 53 alimentant le circuit radio 43 et le microprocesseur 44 seulement quand le badge est en éveil en mode de fonctionnement pleine consommation,
- une batterie 54 alimentant spécifiquement le registre 49, même à l'arrêt de fonctionnement du badge, par exemple en stockage, assurant la préservation de son contenu.

L'ASIC 48 est capable d'assurer des fonctions de sélection de mode, de changement de mode (ou de réveil), et de décodage.

Pour assurer la fonction de décodage en mode de consommation basse, ou de sommeil, l'ASIC 48 met en relation le module radio 43 et le module de décodage 47 lui-même connecté au module de sélection 51.

Pour assurer la fonction de décodage en mode de pleine consommation, en éveil, l'ASIC 48 met en relation le module radio 43 avec le module de décodage 47 lui-même connecté au microprocesseur 44.

Le registre 49 contient une référence R de trame prédéterminée, correspondant à la fonction spécifique du badge 2 intégrée au microprocesseur 44, par exemple la gestion d'un accès par code crypté à un local, un véhicule particulier, éventuellement pour une fonction particulière du porteur du badge. Cette référence peut être mémorisée au moyen d'une entrée spécifique 55 et est explicitée plus loin dans la présente description.

Pour assurer la fonction de sélection de mode, l'ASIC 48 utilise un module 51 de comparaison pour comparer les trames 1 reçues avec la référence de trame mémorisée dans le registre 49. La fonction sélection de mode constitue une fonction de pré-réveil du badge 2, puisqu'elle n'active la fonction de réveil ci-après décrite que si la comparaison est positive.

Enfin, pour assurer la fonction de réveil, l'ASIC 48 ferme un interrupteur 57 qui est ouvert quand le badge 2 est en mode de fonctionnement basse consommation. L'interrupteur 57 commande l'alimentation, par la batterie 53, d'un module 56 de mise en alimentation, donc de réveil, du module radio 43 et du microprocesseur 44 de façon cohérente et conformément à un réveil ordinaire et connu de l'homme du métier, par la même batterie 53.

Inversement, pour passer en mode basse alimentation, l'ASIC 48 coupe l'alimentation du module 56 en ouvrant l'interrupteur 57.

Le module 56 peut aussi être intégré à l'ASIC 48 et éventuellement être alimenté par la batterie 52.

La forme et la structure des signaux et des données reçues, puis le fonctionnement du module de décodage 47 vont maintenant être expliqués plus en détail.

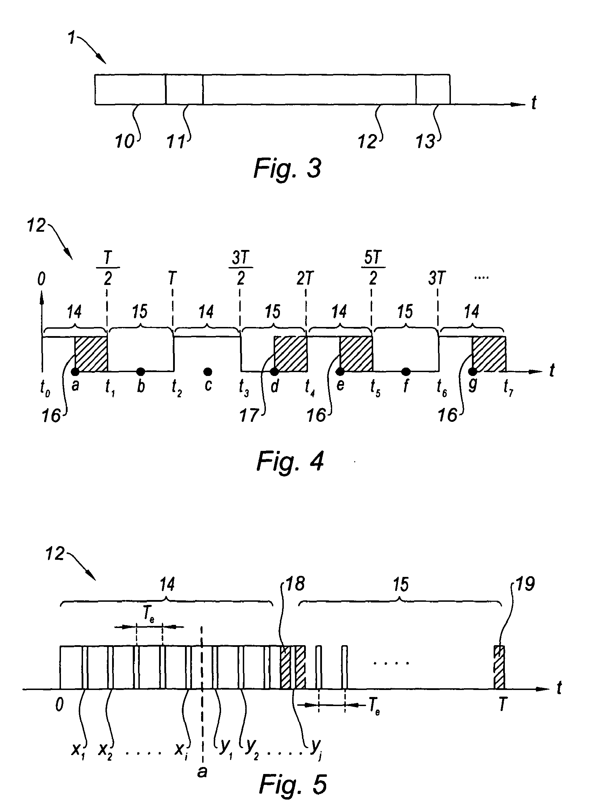

Une trame 1 de données au format HDLC, représentée en figure 3, est généralement composée d'un préambule d'alerte 10 constitué d'au plus seize bits à un, puis d'un drapeau (« flag ») de début 11 de message pour la synchronisation de la réception, suivi des données binaires utiles 12 et enfin d'un drapeau de fin de message 13. Les drapeaux sont constitués d'un octet de valeur '7E' en hexadécimal (ou '01111110' en binaire).

On comprendra tout de suite que la trame de référence R contient le préambule d'alerte 10, le drapeau de début 11 et le drapeau de fin 13. Ces données permettent au module de sélection de reconnaître les messages pertinents et de déclencher les processus de mise en réveil (drapeau de début) ou de mise en sommeil (drapeau de fin).

Les trames 1, en référence à la figure 4, comportent des créneaux de niveaux alternativement haut et bas et les bits à un ou à zéro des données binaires sont représentés par des changements de niveau ou transitions interrompant ou non chaque créneau en leur milieu.

Les données binaires a, b, c, ... , sont portées par un signal carré 14, 15 constitué des créneaux de niveau alternativement haut 14 et bas 15, d'amplitude constante, de période déterminée T, ici de 4 microsecondes, correspondant à une fréquence F, ici de 250 kilohertz, qui, pour le format ci-dessus, équivaut à un débit de 500 kilobits par seconde. On peut aussi dire que le signal carré est modulé par le signal des données binaires, les deux signaux étant de même amplitude ou de même niveau.

Sur la figure 4, on a représenté un exemple de modulations 16 et 17 interrompant respectivement des créneaux haut 14 et bas 15, la modulation 16 étant une transition du niveau haut vers le niveau bas (partie hachurée « enlevée ») et la modulation 17 étant une transition contraire à la précédente (partie hachurée « ajoutée »).

Les transitions haut et bas jouent le même rôle, seule leur présence est représentative d'une donnée binaire. Ainsi, sur l'exemple de la figure 4, les instants a, d, e, g, pour lesquels une transition est présente, représentent une donnée binaire à zéro ou à un suivant que le codage est dit FM0 ou FM1, l'absence de transition signifiant le contraire.

Ainsi, une transition au milieu de la durée d'un créneau de niveau haut, de même qu'un front montant au milieu d'un créneau de niveau bas correspondent à un bit à zéro ou à un suivant que le codage est dit FM0 ou FM1, l'absence de transition signifiant le contraire.

La donnée binaire correspondant à l'exemple de la figure 4 est ' a b c d e f g '. En codage FM0, on extrait la donnée binaire '0110010 '. En codage FM1, l'analyse conduit à une extraction de la donnée binaire "complémentée" à 1 : ' 1001101'.

Physiquement rien ne distingue un front montant ou descendant d'une transition éventuelle 17 ou 16 comparé à un front montant ou descendant de créneau 14 ou 15, sinon son instant d'occurrence a, b, c, ..., relativement à l'instant t1, t2, t3, ... du front.

Or, en référence à la figure 5, le signal peut être dégradé et les fronts des créneaux 14, 15 peuvent ne plus se situer exactement aux instants t1, t2, t3, ... et être décalés dans le temps comme en 18 et 19.

Ici, pour éviter une confusion entre les fronts de créneau et de transition, on sur-échantillonne le signal carré à une fréquence Fe multiple de la fréquence F, le rapport de multiplicité k étant choisi pour que la période Te de l'échantillonnage serve de tolérance temporelle limite en deça de laquelle on considère la confusion inévitable.

Typiquement, comme dans l'exemple de la figure 5, k = T / (2.Te).

Le rapport k = 8 est une bonne valeur. Cette valeur de k détermine celle de Fe : 4 mégahertz, et le nombre théorique k = 2.p et le nombre maximum 2.p + n d'échantillonnages possibles dans un créneau, compte tenu du fait que l'on considère que la tolérance temporelle ci-dessus est n.Te. n = 2 est une bonne valeur pour l'application considérée.

Sur la durée T/2 de chaque créneau 14, 15, on obtient des échantillons x de niveau identique jusqu'à ce que se produise une transition 16, 17 en a, d, e, ... ou un front en t1, t2, t3, ..., puis éventuellement (en cas de transition) des échantillons y de niveau différent.

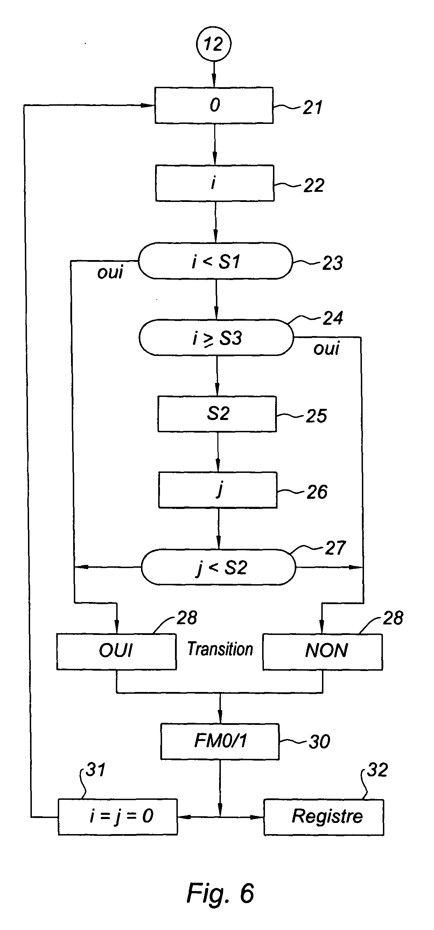

Le procédé d'analyse du signal, illustré par l'organigramme de la figure 6, est alors le suivant :
- à une étape initiale 21 de traitement de créneau 14, 15, entre les deux fronts du créneau tels qu'aux instants to et t1 ou t1 et t2, on échantillonne le signal à la fréquence Fe,
- à l'étape suivante 22, on compte les échantillons x tant qu'il n'y a pas de transition 16, 17, et on arrête le comptage à l'instant tel que a, d, ... d'apparition d'une telle transition pour obtenir un comptage ou nombre i d'échantillons x,
- à l'étape 23, on compare le nombre i à un seuil S1 de détermination de présence de transition, seuil prédéterminé égal à p + n , et si i n'atteint pas ou est plus petit que S1, on passe à une étape 28 ci-dessous de traitement de la présence d'une transition, étant entendu que, dans ce cas, il faut attendre la transition suivante pour échantillonner le bit suivant car, dans le cas d'un « zéro » code FM0, le créneau suivant correspond à la seconde moitié du bit,
- à l'étape 24, on compare le nombre i à un seuil S3 de détermination d'absence de transition, choisi égal à p + 2.n, et si i atteint S3, on passe à une étape 29 ci-dessous de traitement d'absence de transition,
- sinon, à une étape 25, on calcule un second seuil S2 de présence de transition en fonction du nombre i, et on choisit comme formule : S2 = k + n - i, puis
- à une étape 26, on compte les échantillons y qui suivent l'instant a, b, ... jusqu'à la fin 18 du créneau 14, 15, aux instants tels que t1, t2, t3, ... pour obtenir un second nombre j d'échantillons y de niveau différent, et enfin
- à une étape 27, on compare le second nombre j à au second seuil S2 et si j est plus petit que S2, on passe à l'étape 28, sinon on passe à l'étape 29.
- A l'étape 28 de traitement de la présence de transition, la donnée binaire correspondant à la transition est discriminée comme étant un « un » physique et on passe à l'étape 30 de codage et de mémorisation.
- A l'étape 29 de traitement de l'absence de transition, la donnée binaire correspondante est discriminée comme étant un « zéro » physique et on passe à l'étape 30 de codage et de mémorisation.
- A l'étape 30, si on est en codage FM0 on code le « un » physique en « zéro » logique, respectivement le « zéro » physique en « un » logique, ou si on est en codage FM1 on code le « un » physique en « un » logique, respectivement le « zéro » physique en « zéro » logique, puis on mémorise le résultat dans un registre 32 et on passe à une dernière étape 31.
- A l'étape 31, on met les nombres i et j à zéro, prêts pour de nouveaux comptages sur le créneau suivant et on retourne à l'étape initiale 21 de traitement de créneau.

On notera que les seuils S1=k/2+n, et S3=k/2+2.n sont fonctions du rapport k de la fréquence F du signal et de la fréquence d'échantillonnage Fe et de la tolérance temporelle n choisie, et que le seuil S2 est calculé en fonction du nombre i et de ces mêmes paramètres n, k .

Pour mettre en oeuvre le procédé ci-dessus, on peut réaliser un logiciel exécutant l'organigramme de la figure 6, mais on peut aussi effectuer les comptages i et j, puis se référer à un tableau de vérité de discrimination des données binaires. Pour les valeurs des divers paramètres choisis ci-dessus, on obtient le tableau ci-dessous :

| Nombre d'échantillons avant la transition | Nombre d'échantillons après la transition | Décision de transition | Valeur du bit FM0 | Valeur du bit FM1 |
|---|---|---|---|---|
| | | | | |
| 2 | | oui | 0 | 1 |
| 3 | | oui | 0 | 1 |
| 4 | | oui | 0 | 1 |
| 5 | | oui | 0 | 1 |
| 6 | < 4 | oui | 0 | 1 |
| 6 | > ou = 4 | non | 1 | 0 |
| 7 | < 3 | oui | 0 | 1 |
| 7 | > ou = 3 | non | 1 | 0 |
| 8 | | non | 1 | 0 |
| 9 | | non | 1 | 0 |
| 10 | | non | 1 | 0 |

On notera que le procédé peut s'appliquer à toute sorte de flux de données binaires séquentielles de format et de codage similaires au format HDLC, du type comportant des créneaux binaires porteurs de transitions binaires symptomatiques des données numériques, pour en consolider l'extraction.

Le fonctionnement du badge 2 va maintenant être expliqué.

Le badge 2 hors service est initialisé grâce à l'entrée 55 et ne peut ainsi recevoir que des trames comportant un préambule 10 correspondant à la référence R. Cette référence R est mémorisée dans le registre 49 et ne se perd pas, le registre 49 étant alimenté séparément des autres circuits par la batterie 54.

On met en service le badge 2 en insérant les batteries 52 et 53. Mais seul le module radio 43 et l'ASIC 48 sont alimentés, l'ASIC étant programmé pour ne réveiller le module de réveil 56 que sur réception d'un signal pertinent. De ce fait l'interrupteur 57 reste ouvert et le badge 2 reste en mode basse consommation. Par ailleurs, le module de décodage 47 est connecté au module de sélection 51 dans l'ASIC 48.

Tant que le module radio 43 reçoit des signaux non compatibles avec des trames HDLC 1, ou des trames 1 HDLC dont le préambule 10 ne correspond pas à la référence R, le module de décodage 47 ne transmet rien ou transmet une trame 10 non reconnue par le module de sélection 51 et le badge 2 ne change pas de mode de fonctionnement.

Quand il reçoit une trame 1 dont le préambule 10, décodé par le module de décodage 47, correspond à la référence R, le module de sélection 51 le reconnaît, ferme l'interrupteur 57, ce qui alimente et réveille le module de réveil 56.

Le module de réveil 56 réveille alors le microprocesseur 44. Simultanément, l'ASIC 48 connecte le module de décodage 47 sur le microprocesseur 44, lequel reçoit les données décodées et prêtes à l'emploi. Le module de sélection 51 continue cependant de recevoir les données décodées issues du module de décodage 47.

En fin de message, détecté par le module de sélection 51 sur l'occurrence d'un drapeau de fin de message 13, le processus inverse peut s'opérer pour revenir à l'état correspondant au mode de fonctionnement en basse consommation. Mais ce processus inverse peut aussi ne se déclencher qu'après une temporisation prédéterminée, imposée par le module de sélection 51.

## Revendications

1. Télébadge (2) comportant au moins un récepteur (46) de signaux radio, un microprocesseur (44) de traitement de signaux, un module de réveil du microprocesseur (44) agencé pour faire fonctionner ledit microprocesseur (44) selon un mode en sommeil de basse consommation ou un mode en éveil de pleine consommation, le télébadge étant **caractérisé par le fait que** le module de réveil (48, 56) est disposé entre le récepteur radio (46) et le microprocesseur (44).

2. Télébadge selon la revendication 1, dans lequel le module de réveil (48, 56) est agencé pour détecter des trames (1) de format conformes à une référence (R) de trame prédéterminée et ne réveiller le microprocesseur (44) que si les signaux sont conformes à la référence (R).

3. Télébadge selon l'une des revendications 1 et 2, dans lequel le module de réveil (48, 56) comporte une mémoire (49) contenant ladite référence (R),

4. Télébadge selon la revendication 3, dans lequel une alimentation spécifique (54) alimente ladite mémoire (49).

5. Télébadge selon l'une des revendications 3 et 4, dans lequel il est prévu une entrée (55) pour initialiser la mémoire (49).
